# EUROPÄISCHE PATENTSCHRIFT

(11) **EP 2 952 084 B1**
(45) Veröffentlichungstag und Bekanntmachung des Hinweises auf die Patenterteilung: **20.02.2019**
(21) Anmeldenummer: 15158430.7
(22) Anmeldetag: 10.03.2015
(51) Int. Cl.: A01D 41/12, A01D 43/08

(54) **ERNTEMASCHINE**
HARVESTER
MOISSONNEUSE

(30) Priorität: 03.06.2014 DE 102014107769; 24.10.2014 DE 102014115503
(43) Veröffentlichungstag der Anmeldung: 09.12.2015
(73) Patentinhaber: CLAAS Saulgau GmbH, 88348 Bad Saulgau (DE)
(72) Erfinder: Bruns, Thilo, 26632 Ihlow (DE)

(56) Entgegenhaltungen:
- WO-A1-2013/181031
- US-A1- 2007 172 338
- US-A1- 2013 189 061
- US-B2- 6 908 380

## Beschreibung

Die Erfindung betrifft eine gemäß dem Oberbegriff des Anspruchs 1 ausgebildete insbesondere selbstfahrende landwirtschaftliche Erntemaschine wie beispielsweise einen Feldhäcksler oder einen Mähdrescher.

Eine Erntemaschine der eingangsgenannten Art ist beispielsweise aus US 6 908 380 B2 bekannt. Diese als Mähdrescher ausgeführte selbstfahrende Erntemaschine hat eine als Abtankrohr ausgeführte Überladevorrichtung mit einem ersten Teilstück, welches um eine vertikale Drehachse drehbar an der Erntemaschine montiert ist, und einem zweiten Teilstück, welches um eine vertikale Schwenkachse schwenkbar an einem der Erntemaschine abgewandten Längsende des ersten Teilstücks montiert ist, so dass das zweite Teilstück um 180 Grad zwischen einer ausgeklappten Stellung, in der sich das zweite Teilstück als Längenfortsetzung des ersten Teilstücks erstreckt, und einer eingeklappten Stellung verschwenkbar ist, in der das zweite Teilstück längsseits neben dem ersten Teilstück angeordnet ist. Zum Antreiben einer Schwenkbewegung des zweiten Teilstücks von der einen Stellung in die andere Stellung weist die Erntemaschine eine als Hydraulikzylinder ausgebildete Kolben-Zylinder-Einheit auf.

Bei solchen bekannten Lösungen muss üblicherweise neben einer doppeltwirkenden Kolben-Zylinder-Einheit ein Zahnrad- bzw. Zahnscheibengetriebe vorgesehen werden, um den Antrieb der Verschwenkung über den Verschwenkweg von 180 Grad hinweg realisieren zu können. Dies erhöht die Komplexität der Erntemaschine und dadurch den Aufwand für deren Herstellung und Wartung.

Der Erfindung liegt die Aufgabe zugrunde, eine gemäß dem Oberbegriff des Anspruchs 1 ausgebildete Erntemaschine bereitzustellen, die hinsichtlich der Realisierung des Antriebs der Verschwenkung weniger komplex aufgebaut ist.

Dies wird mit einer Erntemaschine gemäß Anspruch 1 erreicht. Weiterbildungen der Erfindung sind in den abhängigen Ansprüchen definiert.

Gemäß der Erfindung weist eine insbesondere selbstfahrende Erntemaschine, wie beispielsweise ein Feldhäcksler oder ein Mähdrescher, eine Überladevorrichtung mit einem ersten Teilstück und einem zweiten Teilstück auf. Das erste Teilstück ist beweglich, insbesondere um eine vertikale Drehachse drehbar, an der Erntemaschine montiert. Das zweite Teilstück ist um eine vertikale Schwenkachse schwenkbar an einem der Erntemaschine abgewandten Längsende des ersten Teilstücks montiert, so dass das zweite Teilstück zwischen einer ausgeklappten Stellung, in der sich das zweite Teilstück als Längenfortsetzung des ersten Teilstücks erstreckt, und einer eingeklappten Stellung verschwenkbar ist, in der das zweite Teilstück längsseits neben dem ersten Teilstück angeordnet ist. Die erfindungsgemäße Erntemaschine umfasst außerdem eine eine Kolbenstange aufweisende Kolben-Zylinder-Einheit zum Antreiben einer Schwenkbewegung des zweiten Teilstücks von der einen Stellung in die andere Stellung.

Die erfindungsgemäße Erntemaschine zeichnet sich dadurch aus, dass die Kolben-Zylinder-Einheit doppeltwirkend ausgebildet so konfiguriert ist, dass ein erster Teil der Schwenkbewegung durch Ausfahren der Kolbenstange realisiert wird und ein sich an den ersten Teil unmittelbar anschließender zweiter Teil der Schwenkbewegung durch wieder Einfahren der ausgefahrenen Kolbenstange realisiert wird.

Dadurch, dass gemäß der Erfindung die Konfiguration, wie insbesondere die Anordnung und die Ansteuerung, der doppeltwirkenden Kolben-Zylinder-Einheit so gestaltet ist, dass ein erster Teil einer vollständigen Schwenkbewegung von der einen Stellung des zweiten Teilstücks in dessen andere Stellung durch Ausfahren der Kolbenstange realisiert wird und ein sich an den ersten Teil unmittelbar anschließender zweiter Teil der vollständigen Schwenkbewegung durch wieder Einfahren der ausgefahrenen Kolbenstange realisiert wird, braucht kein zusätzliches Getriebe zum Realisieren des Antriebs für die vollständige Schwenkbewegung vorgesehen werden. Damit kann die Erntemaschine hinsichtlich der Realisierung des Antriebs der Verschwenkung weniger komplex aufgebaut sein, wodurch sich der Aufwand für deren Herstellung und Wartung reduziert.

Gemäß der Erfindung kann die Überladevorrichtung in ihrer ausgeklappten Stellung gegebenenfalls durch Verdrehen um die Drehachse des ersten Teilstücks gegenüber der Erntemaschine in eine Arbeitsposition verbracht werden, in welcher die Überladevorrichtung z.B. quer zu einer Fahrtrichtung der Erntemaschine seitlich von dieser vorsteht. In der eingeklappten Stellung kann die Überladevorrichtung gegebenenfalls durch um die Drehachse Verdrehen des ersten Teilstücks gegenüber der Erntemaschine in eine Transportposition verbracht werden, in welcher sich beide Teilstücke der Überladevorrichtung in etwa parallel zur Fahrtrichtung der Erntemaschine längsseits nebeneinander angeordnet heckwärts der Erntemaschine erstrecken.

Bevorzugt ist zwischen der ausgeklappten Stellung und der eingeklappten Stellung des zweiten Teilstücks ein die vollständige Schwenkbewegung wiedergebender Gesamtschwenkwinkel des zweiten Teilstücks von etwa 180 Grad definiert. Mit anderen Worten sind die Überladevorrichtung und die Kolben-Zylinder-Einheit so konfiguriert, dass das zweite Teilstück bei einer vollständigen Schwenkbewegung von seiner einen Stellung in seine andere Stellung um einen Gesamtschwenkwinkel von bis zu 180 Grad verschwenkt wird. Gemäß einer Ausführungsform der Erfindung ist die Kolbenstange der Kolben-Zylinder-Einheit an einem ersten Anbindungspunkt an einem von dem ersten und dem zweiten Teilstück angelenkt und ist ein Zylinder der Kolben-Zylinder-Einheit an einem zweiten Anbindungspunkt an dem anderen von dem ersten und dem zweiten Teilstück der Überladevorrichtung angelenkt, wobei die Anbindungspunkte der Kolben-Zylinder-Einheit so angeordnet sind, dass sie sich in einer Zwischenstellung des zweiten Teilstücks zwischen dem ersten Teil und dem zweitem Teil der Schwenkbewegung in einer Linie mit der Schwenkachse befinden.

Mit anderen Worten findet die Bewegungsumkehr der Kolbenstange von Ausfahren auf Einfahren genau in einer Totpunktlage dieser Schwenkanordnung statt. Durch den mit dem ersten Teil der Schwenkbewegung dem zweiten Teilstück gegebenen Schwung beziehungsweise seine Massenträgheit und eine entsprechend schnelle Umschaltung von Ausfahren auf Einfahren der Kolbenstange kann diese Totpunktlage in einfacher Weise überfahren werden und kann der zweite Teil der Schwenkbewegung eingeleitet werden.

Gemäß einer weiteren Ausführungsform der Erfindung ist die Kolben-Zylinder-Einheit so eingerichtet, dass sich deren Kolbenstange in der Zwischenstellung des zweiten Teilstücks zwischen dem ersten Teil und dem zweitem Teil der Schwenkbewegung, das heißt in der Totpunktlage, in einer Maximalausfahrposition befindet. Da in Zwischenstellung des zweiten Teilstücks beziehungsweise der Totpunktlage kein weiteres Ausfahren der Kolbenstange mehr erforderlich ist, kann somit eine Länge der Kolben-Zylinder-Einheit auf die bis zur Zwischenstellung erforderliche Länge begrenzt und somit längenoptimiert werden.

Gemäß noch einer Ausführungsform der Erfindung weist die Erntemaschine außerdem eine Verriegelungseinrichtung auf, welche eingerichtet ist, so dass sie die Schwenkbewegung des zweiten Teilstücks von der einen Stellung in die andere Stellung selektiv sperren und freigeben kann. Auf diese Weise kann die Überladevorrichtung in seiner jeweiligen Stellung gesichert werden und kann ein unbeabsichtigtes Verschwenken sicher vermieden werden.

Bevorzugt ist die Verriegelungseinrichtung eingerichtet, so dass sie die Schwenkbewegung des zweiten Teilstücks von der ausgeklappten Stellung in die eingeklappte Stellung selektiv sperren und freigeben kann. Damit kann insbesondere in der Transportstellung der Überladevorrichtung ein unbeabsichtigtes Verschwenken des zweiten Teilstücks vermieden werden und kann somit die Betriebssicherheit der Erntemaschine erhöht werden. Dadurch, dass die Verriegelungseinrichtung vorgesehen ist, braucht in der ausgeklappten Stellung des zweiten Teilstücks die Kolben-Zylinder-Einheit nicht zum Halten der Stellung betrieben werden und wird somit entlastet. Dies erhöht die Lebensdauer der Kolben-Zylinder-Einheit und vermindert den Energieverbrauch der Erntemaschine.

Gemäß noch einer weiteren Ausführungsform der Erfindung umfasst die Verriegelungseinrichtung einen Riegel und eine Verriegelungsklaue, welche schwenkbar an einem von dem ersten und dem zweiten Teilstück angebracht ist, so dass sie zwischen einer Verriegelungsposition, in der die Verriegelungsklaue mit dem an dem anderen von dem ersten und dem zweiten Teilstück angebrachten Riegel in formschlüssigen Eingriff steht, um die Schwenkbewegung des zweiten Teilstücks zu sperren, und einer Entriegelungsposition verschwenkbar ist, in der die Verriegelungsklaue außer Eingriff mit dem Riegel gebracht ist, um die Schwenkbewegung des zweiten Teilstücks freizugeben, sowie Antriebsmittel, wie z.B. einen Rotationsmotor oder einen Linearmotor, zum Antreiben einer Schwenkbewegung der Verriegelungsklaue.

Diese Ausgestaltung der Verriegelungseinrichtung ist einfach aufgebaut und somit mit geringen Aufwand herzustellen und zu warten. Zudem weist diese Ausgestaltung der Verriegelungseinrichtung eine gerade für den Feldeinsatz vorteilhafte Robustheit auf, wodurch die Betriebszuverlässigkeit der Erntemaschine erhöht wird.

Gemäß einer Ausführungsform der Erfindung weist die Erntemaschine außerdem eine Steuervorrichtung, die eingerichtet ist, die Kolben-Zylinder-Einheit zum Ausfahren und Einfahren der Kolbenstange anzusteuern, und eine Sensoranordnung auf, die mit der Steuervorrichtung gekoppelt ist und die eingerichtet ist zu erfassen, wenn sich das zweite Teilstück der Überladevorrichtung am Ende des ersten Teils der Schwenkbewegung von der einen Stellung in die andere Stellung befindet, das heißt in der Zwischenstellung beziehungsweise Totpunktlage befindet.

Mit der Sensoranordnung kann somit genau der Zeitpunkt für das Umsteuern der Bewegungsrichtung der Kolbenstange von Ausfahren auf wieder Einfahren bestimmt werden. Ein von der Sensoranordnung erzeugtes Sensorsignal wird bei Erreichen der Zwischenstellung beziehungsweise Totpunktlage an die Steuervorrichtung übermittelt und diese steuert dann die Bewegungsrichtung der Kolbenstange von Ausfahren auf wieder Einfahren um.

Gemäß noch einer Ausführungsform der Erfindung weist die Sensoranordnung einen Wegsensor auf, der eingerichtet ist, einen Verfahrweg der Kolbenstange zu erfassen, so dass der Zeitpunkt für das Umsteuern der Bewegungsrichtung der Kolbenstange von Ausfahren auf wieder Einfahren bestimmt werden kann.

Gemäß einer weiteren Ausführungsform der Erfindung ist die Kolben-Zylinder-Einheit zum Aus- und Einfahren der Kolbenstange in ein Druckfluidsystem der Erntemaschine eingebunden und weist die Sensoranordnung einen Drucksensor auf, der eingerichtet ist, eine Druckveränderung eines Druckfluids im Druckfluidsystem zu erfassen.

Da es im Druckfluidsystem zu einem Druckanstieg kommt, wenn sich die Kolbenstange in einer ihrer Endlagen (Maximalausfahrposition, Maximaleinfahrposition) befindet, kann dieser Druckanstieg vorteilhaft als Indikator zum Erfassen des Zeitpunkts für das Umsteuern der Bewegungsrichtung der Kolbenstange von Ausfahren auf wieder Einfahren genutzt werden.

Gemäß noch einer Ausführungsform der Erfindung kann die Kolben-Zylinder-Einheit auf hydraulischer Basis arbeiten, das heißt als doppeltwirkender Hydraulikzylinder ausgebildet sein. Damit lässt sich die Kolben-Zylinder-Einheit einfach in ein Hydrauliksystem (Druckfluidsystem) der Erntemaschine einbinden.

Gemäß noch einer Ausführungsform der Erfindung kann die Kolben-Zylinder-Einheit als hydraulischer oder elektrischer Umschaltzylinder ausgebildet sein, das heißt können die für die Einfahr-und-Ausfahr-Ansteuerung der Kolben-Zylinder-Einheit erforderlichen Komponenten in die Kolben-Zylinder-Einheit integriert sein, so dass die Kolben-Zylinder-Einheit in ihren jeweiligen Endlagen (Maximalausfahrposition, Maximaleinfahrposition) selbsttätig die Bewegungsrichtung der Kolbenstange umschalten kann.

Gemäß einer weiteren Ausführungsform der Erfindung können die Antriebsmittel der Verriegelungseinrichtung einen Linearmotor in Form einer weiteren hydraulischen Kolben-Zylinder-Einheit aufweisen. Bevorzugt kann die Ansteuerung dieser weiteren Kolben-Zylinder-Einheit zum Ein- und Ausfahren ihrer Kolbenstange durch die Steuervorrichtung der zum Verschwenken des zweiten Teilstücks der Überladevorrichtung vorgesehenen Kolben-Zylinder-Einheit realisiert sein.

Bei der landwirtschaftlichen Erntemaschine kann es sich um einen Feldhäcksler oder einen Mähdrescher handeln. Entsprechend ist die Überladevorrichtung bei einem Feldhäcksler als Auswurfkrümmer und bei einem Mähdrescher als ein Abtankrohr ausgeführt.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand einer bevorzugten Ausführungsform und unter Bezugnahme auf die beigefügten Figuren beschrieben.
- Fig.1: zeigt eine schematische Seitenansicht einer mit einem Auswurfkrümmer versehenen Erntemaschine gemäß einer Ausführungsform der Erfindung.
- Fig.2: zeigt eine schematische perspektivische Teilansicht des Auswurfkrümmers der Erntemaschine von Fig. 1 in einem ersten Betriebszustand.
- Fig.3: zeigt in Draufsicht eine schematische Teilansicht des Auswurfkrümmers der Erntemaschine von Fig. 1 in dem ersten Betriebszustand.
- Fig.4: zeigt in Draufsicht eine schematische Teilansicht des Auswurfkrümmers der Erntemaschine von Fig. 1 in einem zweiten Betriebszustand.
- Fig.5: zeigt in Draufsicht eine schematische Teilansicht des Auswurfkrümmers der Erntemaschine von Fig. 1 in einem dritten Betriebszustand.

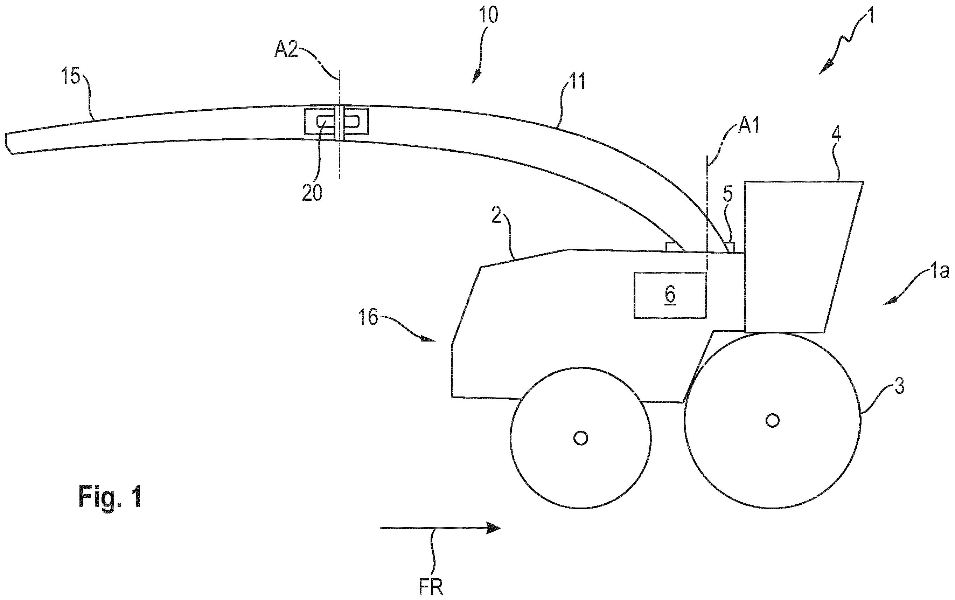

Im Folgenden wird unter Bezugnahme auf die Figuren 1 bis 5 eine selbstfahrende Erntemaschine 1 gemäß einer Ausführungsform der Erfindung beschrieben werden. Gemäß der beschriebenen Ausführungsform ist die Erntemaschine beispielhaft als selbstfahrender Feldhäcksler ausgebildet.

Fig. 1 zeigt die Erntemaschine 1 in schematischer Seitenansicht. Ein Maschinengehäuse 2 der Erntemaschine 1 enthält einen Motor (nicht gezeigt) zum Antreiben von Rädern 3 sowie eines an einer Frontseite 1a der Erntemaschine 1 montierbaren Erntevorsatzes (nicht gezeigt). Mit Hilfe des Erntevorsatzes vom Boden aufgenommenes Erntegut wird in einer im Innern des Maschinengehäuses 2 angeordneten Häckseltrommel (nicht gezeigt) zerkleinert und in einen hinter einer Fahrerkabine 4 aufsteigenden Auswurfschacht (nicht gezeigt) ausgegeben. Ein ebenfalls an dem Auswurfschacht im Innern des Maschinengehäuse 2 angeordneter Nachbeschleuniger (nicht gezeigt) schleudert das gehäckselte Erntegut durch einen auf einem Drehkranz 5 an der Oberseite des Maschinengehäuses 2 um eine vertikale Drehachse A1 drehbeweglich montierten Auswurfkrümmer 10 als Überladevorrichtung.

Ein erstes Teilstück 11 des Auswurfkrümmers 10 ist mit einem ersten Längsende dessen um die vertikale Drehachse A1 drehbeweglich am Drehkranz 5 der Erntemaschine 1 montiert. Ein zweites Teilstück 15 des Auswurfkrümmers 10 ist über ein Schwenkgelenk 20 schwenkbar an einem dem Drehkranz 5 der Erntemaschine 1 abgewandten Längsende des ersten Teilstücks 11 montiert.

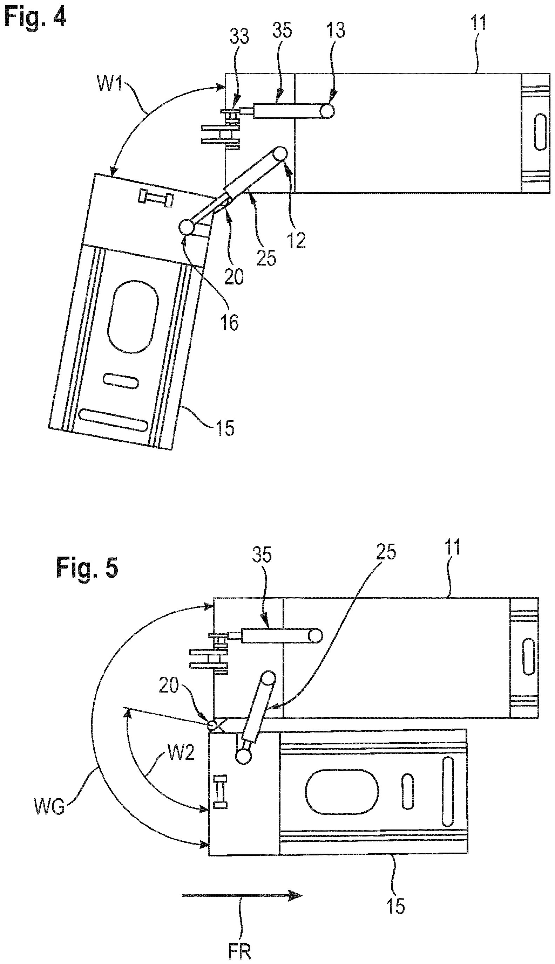

Das Schwenkgelenk 20 stellt eine vertikale Schwenkachse A2 bereit, so dass das zweite Teilstück 15 um die Schwenkachse A2 zwischen einer in Fig. 1 gezeigten ausgeklappten Stellung, in der sich das zweite Teilstück 15 als Längenfortsetzung des ersten Teilstücks 11 erstreckt, und einer in Fig. 5 gezeigten eingeklappten Stellung verschwenkbar ist, in der das zweite Teilstück 15 längsseits neben dem ersten Teilstück 11 angeordnet ist.

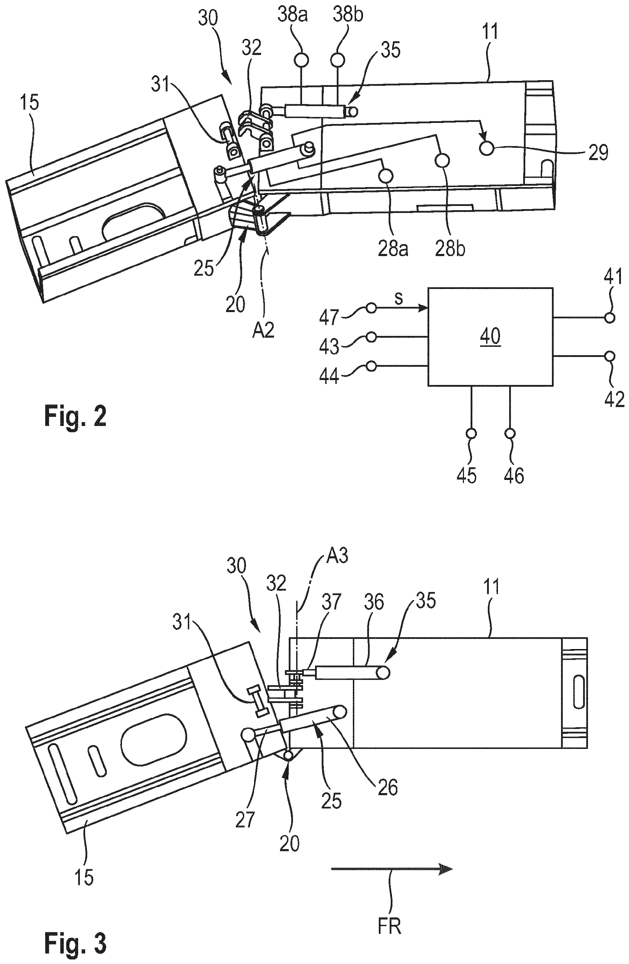

Um eine Schwenkbewegung des zweiten Teilstücks 15 von der einen Stellung in die andere Stellung anzutreiben, weist die Erntemaschine 1 eine erste doppeltwirkende hydraulische Kolben-Zylinder-Einheit 25 mit einem Zylinder 26 und einer bezüglich des Zylinders 26 ein- und ausfahrbaren Kolbenstange 27 (siehe Fig. 3) auf.

Die Kolbenstange 27 der ersten Kolben-Zylinder-Einheit 25 ist an einem ersten Anbindungspunkt 16 an dem zweiten Teilstück 15 des Auswurfkrümmers 10 angelenkt, und der Zylinder 26 der ersten Kolben-Zylinder-Einheit 25 ist an einem zweiten Anbindungspunkt 12 an dem ersten Teilstück 11 des Auswurfkrümmers 10 angelenkt (siehe Fig. 4).

Die Erntemaschine 1 weist außerdem eine Verriegelungseinrichtung 30 auf, welche eingerichtet ist, so dass sie die Schwenkbewegung des zweiten Teilstücks 15 von der einen Stellung in die andere Stellung selektiv sperren und freigeben kann. In der vorliegenden Ausführungsform der Erfindung ist die Verriegelungseinrichtung 30 eingerichtet, so dass sie die Schwenkbewegung des zweiten Teilstücks 15 von der ausgeklappten Stellung in die eingeklappte Stellung selektiv sperren und freigeben kann.

Zu diesem Zweck weist die Verriegelungseinrichtung 30 einen kreiszylindrischen bzw. bolzenförmigen Riegel 31 und eine Verriegelungsklaue 32 auf. Der Riegel 31 ist an dem zweiten Teilstück 15 angebracht. Die Verriegelungsklaue 32 ist um eine sich in etwa horizontal erstreckende Schwenkachse A3 schwenkbar an dem ersten Teilstück angebracht, so dass die Verriegelungsklaue 32 zwischen einer Verriegelungsposition, in der die Verriegelungsklaue 32 mit dem Riegel 31 in formschlüssigen Eingriff steht, und einer Entriegelungsposition (wie in den Figuren 2-5 gezeigt) verschwenkbar ist, in der die Verriegelungsklaue 32 nach oben geschwenkt außer Eingriff mit dem Riegel 31 gebracht ist.

In der Verriegelungsposition wird die Schwenkbewegung des zweiten Teilstücks 15 gesperrt, und in der Entriegelungsposition wird die Schwenkbewegung des zweiten Teilstücks 15 freigegeben.

Um eine Schwenkbewegung der Verriegelungsklaue 32 um die horizontale Schwenkachse A3 anzutreiben, weist die Verriegelungseinrichtung 30 Antriebsmittel in Form einer zweiten doppeltwirkenden hydraulischen Kolben-Zylinder-Einheit 35 mit einem Zylinder 36 und einer bezüglich des Zylinders 36 ein- und ausfahrbaren Kolbenstange 37 (siehe Fig. 3) auf.

Der Zylinder 36 der zweiten Kolben-Zylinder-Einheit 35 ist an einem Anbindungspunkt 13 an dem ersten Teilstück 11 des Auswurfkrümmers 10 angelenkt, und die Kolbenstange 37 der zweiten Kolben-Zylinder-Einheit 35 ist über einen nicht dargestellten Hebel mit einer die horizontale Schwenkachse A3 bereitstellenden und die Verriegelungsklaue 32 tragenden Stellwelle 33 der Verriegelungseinrichtung 30 angelenkt (siehe Fig. 4).

Um die erste Kolben-Zylinder-Einheit 25 und die zweite Kolben-Zylinder-Einheit 35 mit Antriebsenergie zum Ein- und Ausfahren ihrer jeweiligen Kolbenstangen 27, 37 zu versorgen, weist die Erntemaschine 1 ein hydraulisches Druckfluidsystem 6 (siehe Fig. 1) auf, in welches die beiden Kolben-Zylinder-Einheiten 25, 35 über eine Steuervorrichtung 40 eingebunden sind und welches eine nicht dargestellte Druckquelle zu Bereitstellen von unter einem Arbeitsdruck stehendem hydraulischem Druckfluid und einen nicht dargestellten Tank zur Speicherung des Druckfluids umfasst.

Die Steuervorrichtung 40 ist eingerichtet, die Kolben-Zylinder-Einheiten 25, 35 zum Ausfahren und Einfahren von deren jeweiligen Kolbenstange 27, 37 anzusteuern. Zu diesem Zweck kann die Steuervorrichtung 40 eine Mehrzahl von Hydrauliksteuerventilen, Sensoren, elektrischen und/oder elektronischen Komponenten (nicht gezeigt) usw. zum Steuern einer Zufuhr von hydraulischem Druckfluid zu den Kolben-Zylinder-Einheiten 25, 35 und einer Abfuhr des Druckfluids von den Kolben-Zylinder-Einheiten 25, 35 aufweisen.

Zur fluidmäßigen Anbindung der Steuervorrichtung 40 an das Druckfluidsystem 6 sind Druckfluidanschlüsse 41, 42 der Steuervorrichtung 40 über nicht dargestellte Druckleitungen mit dem Druckfluidsystem 6 verbunden (siehe Fig.2). Zur fluidmäßigen Anbindung der ersten Kolben-Zylinder-Einheit 25 an die Steuervorrichtung 40 sind Druckkammeranschlüsse 28a, 28b des Zylinders 26 der ersten Kolben-Zylinder-Einheit 25 über nicht dargestellte Druckleitungen mit Druckfluidanschlüssen 43, 44 der Steuervorrichtung 40 verbunden. Zur fluidmäßigen Anbindung der zweiten Kolben-Zylinder-Einheit 35 an die Steuervorrichtung 40 sind Druckkammeranschlüsse 38a, 38b des Zylinders 36 der zweiten Kolben-Zylinder-Einheit 35 über nicht dargestellte Druckleitungen mit Druckfluidanschlüssen 45, 46 der Steuervorrichtung 40 verbunden.

Um einen Verfahrweg beziehungsweise eine Verfahrposition der Kolbenstange 27 der ersten Kolben-Zylinder-Einheit 25 erfassen zu können, ist außerdem eine Sensoranordnung vorgesehen, die mit der Steuervorrichtung 40 gekoppelt ist.

Genauer weist die Sensoranordnung einen nicht vollständig dargestellten Wegsensor auf, der in die erste Kolben-Zylinder-Einheit 25 integriert ist und der eingerichtet ist, einen Verfahrweg von deren Kolbenstange 27 zu erfassen. Um ein vom Wegsensor erzeugtes Wegsignal s an die Steuervorrichtung 40 zur Auswertung übermitteln zu können, ist einen Signalanschluss 29 des Wegsensors über eine oder mehrere nicht dargestellte Signalleitungen mit einem Signalanschluss 47 der Steuervorrichtung 40 verbunden.

Die Sensoranordnung weist außerdem einen nicht dargestellten Drucksensor auf, der in die Steuervorrichtung 40 integriert ist und der eingerichtet ist, eine Druckveränderung des Druckfluids im Druckfluidsystem zu erfassen.

Im Folgenden wird ein Verschwenken des zweiten Teilstücks 15 des Auswurfkrümmers 10 von der in Fig. 1 gezeigten ausgeklappten Stellung in die in Fig. 5 gezeigte eingeklappte Stellung und umgekehrt beschrieben werden.

In diesem Zusammenhang ist zu erwähnen, dass der Auswurfkrümmer 10 in seiner ausgeklappten Stellung gegebenenfalls durch um die Drehachse A1 Verdrehen des ersten Teilstücks 11 gegenüber der Erntemaschine 1 in eine Arbeitsposition verbracht werden kann, in welcher der Auswurfkrümmer 10 z.B. quer zu einer Fahrtrichtung FR der Erntemaschine 1 seitlich von dieser vorsteht.

In der eingeklappten Stellung kann der Auswurfkrümmer 10 gegebenenfalls durch um die Drehachse A1 Verdrehen des ersten Teilstücks 11 gegenüber der Erntemaschine 1 in eine Transportposition verbracht werden, in welcher sich beide Teilstücke 11, 15 des Auswurfkrümmers 10 in etwa parallel zur Fahrtrichtung FR der Erntemaschine 1 längsseits nebeneinander angeordnet heckwärts bzw. über eine Heckseite 1b der Erntemaschine 1 hinaus erstrecken.

Wie schon erwähnt, befindet sich das zweite Teilstück 15 des Auswurfkrümmers 10 in Fig. 1 in der ausgeklappten Stellung, in der sich das zweite Teilstück 15 als Längenfortsetzung des ersten Teilstücks 11 im Wesentlichen in einer Linie mit diesem erstreckt. In Fig. 1 ist dabei der Auswurfkrümmer 10 durch um die Drehachse A1 Verdrehen des ersten Teilstücks 11 gegenüber der Erntemaschine 1 in eine Position verbracht, in der sich der Auswurfkrümmer 10 zur Vorbereitung der Transportposition in etwa parallel zur Fahrtrichtung FR der Erntemaschine 1 heckwärts bzw. über die Heckseite 1b der Erntemaschine 1 hinaus erstreckt.

Um die Transportposition zu vollenden, muss nun das zweite Teilstück 15 ausgehend von der in Fig. 1 gezeigten Position des Auswurfkrümmers 10 in die eingeklappte Stellung verschwenkt werden.

Zu diesem Zweck wird, wie in Fig. 2 und Fig. 3 gezeigt, zuerst unter Steuerung der Steuervorrichtung 40 die Kolbenstange 37 der zweiten Kolben-Zylinder-Einheit 35 der Verriegelungseinrichtung 30 eingefahren, so dass die Verriegelungsklaue 32 durch Drehen der Stellwelle 33 der Verriegelungseinrichtung 30 aus der Verriegelungsposition um die horizontale Schwenkachse A3 nach oben in die Entriegelungsposition verschwenkt wird.

Als Nächstes wird, wie in Fig. 4 gezeigt, unter Steuerung der Steuervorrichtung 40 die Kolbenstange 27 der ersten Kolben-Zylinder-Einheit 25 bis auf eine Maximalausfahrposition ausgefahren und dabei das zweite Teilstück 15 um einen ersten Teilschwenkwinkel W1 um die vertikale Schwenkachse A2 des Schwenkgelenks 20 verschwenkt und damit ein erster Teil der Schwenkbewegung des zweiten Teilstücks 15 von der ausgeklappten Stellung in die eingeklappte Stellung vollendet. In dieser Zwischenposition zwischen dem ersten Teil und dem nachfolgenden zweiten Teil der Schwenkbewegung des zweiten Teilstücks 15 befinden sich die Anbindungspunkte 12, 16 der ersten Kolben-Zylinder-Einheit 25 in einer Linie mit der vertikalen Schwenkachse A2 des Schwenkgelenks 20, wie in Fig. 4 gezeigt. Damit ist eine Totpunktlage dieser Schwenkanordnung gegeben.

Da in der in Fig. 4 gezeigten Zwischenposition die Kolbenstange 27 der ersten Kolben-Zylinder-Einheit 25 bis auf Anschlag in die Maximalausfahrposition ausgefahren ist, kommt es in dem Druckfluidsystem 6 zu einem leichten Druckanstieg, welcher von dem in die Steuervorrichtung 40 integrierten Drucksensor der Sensoranordnung erfasst wird und von der Steuervorrichtung 40 als Indikator für das Erreichen der Zwischenposition ausgewertet wird.

Zusätzlich oder alternativ dazu überträgt der Wegsensor der Sensoranordnung ein die Maximalausfahrposition kennzeichnendes Wegsignals an die Steuervorrichtung 40, welche das Wegsignal s als Indikator für das Erreichen der Zwischenposition ausgewertet.

Im Ergebnis ist die mit der Steuervorrichtung 40 gekoppelte Sensoranordnung eingerichtet zu erfassen, wenn sich das zweite Teilstück 15 des Auswurfkrümmers 10 am Ende des ersten Teils der Schwenkbewegung von der ausgeklappten Stellung in die eingeklappte Stellung befindet.

Nachdem die Steuervorrichtung 40 ermittelt hat, dass der erste Teil der Schwenkbewegung des zweiten Teilstücks 15 von der ausgeklappten Stellung in die eingeklappte Stellung vollendet ist bzw. die Zwischenposition erreicht ist, steuert die Steuervorrichtung 40 die erste Kolben-Zylinder-Einheit 25 so um, dass die Kolbenstange 27 der ersten Kolben-Zylinder-Einheit 25 bis auf eine Maximaleinfahrposition eingefahren und dabei das zweite Teilstück 15 um einen zweiten Teilschwenkwinkel W2 um die vertikale Schwenkachse A2 des Schwenkgelenks 20 verschwenkt wird, wie in Fig. 5 gezeigt.

Wie aus Fig. 5 ersichtlich, ist zwischen der ausgeklappten Stellung und der eingeklappten Stellung des zweiten Teilstücks 15 des Auswurfkrümmers 10 dabei ein Gesamtschwenkwinkel WG (WG = W1 + W2) des zweiten Teilstücks 15 von bis zu 180 Grad definiert.

Da die Bewegungsumkehr der Kolbenstange 27 von Ausfahren auf Einfahren genau in der Totpunktlage dieser Schwenkanordnung stattfindet, kann durch den mit dem ersten Teil der Schwenkbewegung dem zweiten Teilstück 15 gegebenen Schwung beziehungsweise seine Massenträgheit und eine entsprechend schnelle Umschaltung von Ausfahren auf Einfahren der Kolbenstange 27 diese Totpunktlage in einfacher Weise überfahren werden und kann der zweite Teil der Schwenkbewegung realisiert werden.

Damit befindet sich das zweite Teilstück 15 des Auswurfkrümmers 10 nun in der eingeklappten Stellung, wodurch die Transportposition des Auswurfkrümmers 10 hergestellt ist.

Da in der in Fig. 5 gezeigten eingeklappten Stellung des zweiten Teilstücks 15 die Kolbenstange 27 der ersten Kolben-Zylinder-Einheit 25 bis auf Anschlag in die Maximaleinfahrposition eingefahren ist, kommt es in dem Druckfluidsystem 6 wieder zu einem leichten Druckanstieg, welcher von dem in die Steuervorrichtung 40 integrierten Drucksensor der Sensoranordnung erfasst wird und von der Steuervorrichtung 40 als Indikator für das Erreichen der eingeklappten Stellung ausgewertet wird.

Zusätzlich oder alternativ dazu überträgt der Wegsensor der Sensoranordnung ein die Maximaleinfahrposition kennzeichnendes Wegsignal s an die Steuervorrichtung 40, welche das Wegsignal s als Indikator für das Erreichen der eingeklappten Stellung ausgewertet.

Im Ergebnis ist die mit der Steuervorrichtung 40 gekoppelte Sensoranordnung eingerichtet zu erfassen, wenn sich das zweite Teilstück 15 des Auswurfkrümmers 10 am Ende des zweiten Teils der Schwenkbewegung von der ausgeklappten Stellung in die eingeklappte Stellung befindet. Nachdem die Steuervorrichtung 40 ermittelt hat, dass die eingeklappte Stellung des zweiten Teilstücks 15 des Auswurfkrümmers 10 erreicht ist, kann die Steuervorrichtung 40 z.B. nicht dargestellte weitere Komponenten der Verriegelungseinrichtung 30 aktivieren, um das zweite Teilstück 15 in der eingeklappten Stellung zu verriegeln.

Soll nun das zweite Teilstück 15 des Auswurfkrümmers 10 aus der in Fig. 5 gezeigten eingeklappten Stellung wieder in die in Fig. 1 gezeigte ausgeklappte Stellung verbracht werden, so sind die folgenden Schritte durchzuführen.

Zuerst wird, wie in Fig. 4 gezeigt, unter Steuerung der Steuervorrichtung 40 die Kolbenstange 27 der ersten Kolben-Zylinder-Einheit 25 bis auf die Maximalausfahrposition ausgefahren und dabei das zweite Teilstück 15 um den einen Teilschwenkwinkel W2 um die vertikale Schwenkachse A2 des Schwenkgelenks 20 verschwenkt und damit ein erster Teil der Schwenkbewegung des zweiten Teilstücks 15 von der eingeklappten Stellung in die ausgeklappte Stellung vollendet. In dieser Zwischenposition befinden sich wieder die Anbindungspunkte 12, 16 der ersten Kolben-Zylinder-Einheit 25 in einer Linie mit der vertikalen Schwenkachse A2 des Schwenkgelenks 20, wie in Fig. 4 gezeigt.

Nachdem die Steuervorrichtung 40 wie oben beschrieben mit Hilfe der Sensoranordnung ermittelt hat, dass der erste Teil der Schwenkbewegung des zweiten Teilstücks 15 von der eingeklappten Stellung in die ausgeklappte Stellung vollendet ist bzw. die Zwischenposition erreicht ist, steuert die Steuervorrichtung 40 die erste Kolben-Zylinder-Einheit 25 so um, dass die Kolbenstange 27 der ersten Kolben-Zylinder-Einheit 25 bis auf die Maximaleinfahrposition eingefahren und dabei das zweite Teilstück 15 um den anderen Teilschwenkwinkel W1 um die vertikale Schwenkachse A2 des Schwenkgelenks 20 verschwenkt wird, wie in den Figuren 1 bis 3 gezeigt.

In Summe wird das zweite Teilstück 15 des Auswurfkrümmers 10 somit wieder um den Gesamtschwenkwinkel WG (WG = W1 + W2) von bis zu 180 Grad um die vertikale Schwenkachse A2 verschwenkt, bis es die ausgeklappte Stellung gemäß Fig. 1 erreicht hat.

Nachdem die Steuervorrichtung 40 wie oben beschrieben mit Hilfe der Sensoranordnung ermittelt hat, dass die ausgeklappte Stellung des zweiten Teilstücks 15 des Auswurfkrümmers 10 erreicht ist, wird unter Steuerung der Steuervorrichtung 40 die Kolbenstange 37 der zweiten Kolben-Zylinder-Einheit 35 der Verriegelungseinrichtung 30 wieder ausgefahren, so dass die Verriegelungsklaue 32 durch Drehen der Stellwelle 33 der Verriegelungseinrichtung 30 aus der Entriegelungsposition um die horizontale Schwenkachse A3 nach unten in die Verriegelungsposition verschwenkt wird. Damit ist das zweite Teilstück 15 in der ausgeklappten Stellung verriegelt.

Um aus der in Fig. 1 gezeigten Position des Auswurfkrümmers 10 diesen in die Arbeitsposition zu verbringen, kann nun das erste Teilstück 11 des Auswurfkrümmers 10 (gemeinsam mit dem zweiten Teilstück 15) um die Drehachse A1 verdreht werden, bis der Auswurfkrümmer 10 quer zur Fahrtrichtung FR der Erntemaschine 1 seitlich von dieser vorsteht.

### Bezugszeichenliste

- 1: Erntemaschine
- 1a: Frontseite
- 1b: Heckseite
- 2: Maschinengehäuse
- 3: Räder
- 4: Fahrerkabine
- 5: Drehkranz
- 6: Druckfluidsystem
- 10: Auswurfkrümmer
- 11: erstes Teilstück
- 12: Anbindungspunkt
- 13: Anbindungspunkt
- 15: zweites Teilstück
- 16: Anbindungspunkt
- 20: Schwenkgelenk
- 25: Kolben-Zylinder-Einheit
- 26: Zylinder
- 27: Kolbenstange
- 28a: Druckkammeranschluss
- 28b: Druckkammeranschluss
- 29: Signalanschluss
- 30: Verriegelungseinrichtung
- 31: Riegel
- 32: Verriegelungsklaue
- 33: Stellwelle
- 35: Kolben-Zylinder-Einheit
- 36: Zylinder
- 37: Kolbenstange
- 38a: Druckkammeranschluss
- 38b: Druckkammeranschluss
- 40: Steuervorrichtung
- 41: Druckfluidanschluss
- 42: Druckfluidanschluss
- 43: Druckfluidanschluss
- 44: Druckfluidanschluss
- 45: Druckfluidanschluss
- 46: Druckfluidanschluss
- 47: Signalanschluss
- A1: Drehachse
- A2: Schwenkachse
- A3: Schwenkachse
- FR: Fahrtrichtung
- s: Wegsignal
- W1: Teilschwenkwinkel
- W2: Teilschwenkwinkel
- WG: Gesamtschwenkwinkel

## Patentansprüche

1. Erntemaschine (1) mit:
einer Überladevorrichtung (10), der ein erstes Teilstück (11), welches beweglich an der Erntemaschine (1) montiert ist, und ein zweites Teilstück (15) aufweist, welches um eine vertikale Schwenkachse (A2) schwenkbar an einem der Erntemaschine (1) abgewandten Längsende des ersten Teilstücks (11) montiert ist, so dass das zweite Teilstück (15) zwischen einer ausgeklappten Stellung, in der sich das zweite Teilstück (15) als Längenfortsetzung des ersten Teilstücks (11) erstreckt, und einer eingeklappten Stellung verschwenkbar ist, in der das zweite Teilstück (15) längsseits neben dem ersten Teilstück (11) angeordnet ist, und
einer Kolben-Zylinder-Einheit (25) mit einer Kolbenstange (27) zum Antreiben einer Schwenkbewegung des zweiten Teilstücks (15) von der einen Stellung in die andere Stellung,
**dadurch gekennzeichnet, dass** die Kolben-Zylinder-Einheit (25) so konfiguriert ist, dass ein erster Teil der Schwenkbewegung durch Ausfahren der Kolbenstange (27) realisiert wird und ein zweiter Teil der Schwenkbewegung durch Einfahren der Kolbenstange (27) realisiert wird.

2. Erntemaschine (1) gemäß Anspruch 1, wobei zwischen der ausgeklappten Stellung und der eingeklappten Stellung des zweiten Teilstücks (15) ein Gesamtschwenkwinkel (WG) des zweiten Teilstücks (15) von bis zu 180 Grad definiert ist.

3. Erntemaschine (1) gemäß Anspruch 1 oder 2, wobei die Kolbenstange (27) der Kolben-Zylinder-Einheit (25) an einem ersten Anbindungspunkt (16, 12) an einem von dem ersten und dem zweiten Teilstück (11, 15) angelenkt ist und ein Zylinder (26) der Kolben-Zylinder-Einheit (25) an einem zweiten Anbindungspunkt (12, 16) an dem anderen von dem ersten und dem zweiten Teilstück (11, 15) der Überladevorrichtung (10) angelenkt ist, und wobei die Anbindungspunkte (12, 16) der Kolben-Zylinder-Einheit (25) so angeordnet sind, dass sie sich zwischen dem ersten Teil und dem zweitem Teil der Schwenkbewegung in einer Linie mit der Schwenkachse (A2) befinden.

4. Erntemaschine (1) gemäß einem der Ansprüche 1 bis 3, wobei die Kolben-Zylinder-Einheit (25) so eingerichtet ist, dass sich deren Kolbenstange (27) zwischen dem ersten Teil und dem zweitem Teil der Schwenkbewegung in einer Maximalausfahrposition befindet.

5. Erntemaschine (1) gemäß einem der Ansprüche 1 bis 4, ferner mit einer Verriegelungseinrichtung (30), welche eingerichtet ist, so dass sie die Schwenkbewegung des zweiten Teilstücks (15) von der einen Stellung in die andere Stellung selektiv sperren und freigeben kann.

6. Erntemaschine (1) gemäß Anspruch 5, wobei die Verriegelungseinrichtung (30) eingerichtet ist, so dass sie die Schwenkbewegung des zweiten Teilstücks (15) von der ausgeklappten Stellung in die eingeklappte Stellung selektiv sperren und freigeben kann.

7. Erntemaschine (1) gemäß Anspruch 5 oder 6, wobei die Verriegelungseinrichtung (30) einen Riegel (31) und eine Verriegelungsklaue (32), welche schwenkbar an einem von dem ersten und dem zweiten Teilstück (11, 15) angebracht ist, so dass sie zwischen einer Verriegelungsposition, in der die Verriegelungsklaue (32) mit dem an dem anderen von dem ersten und dem zweiten Teilstück (11, 15) angebrachten Riegel (31) in formschlüssigen Eingriff steht, um die Schwenkbewegung des zweiten Teilstücks (15) zu sperren, und einer Entriegelungsposition verschwenkbar ist, in der die Verriegelungsklaue (32) außer Eingriff mit dem Riegel (31) gebracht ist, um die Schwenkbewegung des zweiten Teilstücks (15) freizugeben, sowie Antriebsmittel (35) zum Antreiben einer Schwenkbewegung der Verriegelungsklaue (32) aufweist.

8. Erntemaschine (1) gemäß einem der Ansprüche 1 bis 7, ferner mit einer Steuervorrichtung (40), die eingerichtet ist, die Kolben-Zylinder-Einheit (25) zum Ausfahren und Einfahren der Kolbenstange (27) anzusteuern, und einer Sensoranordnung, die mit der Steuervorrichtung (40) gekoppelt ist und die eingerichtet ist zu erfassen, wenn sich das zweite Teilstück (15) der Überladevorrichtung (10) am Ende des ersten Teils der Schwenkbewegung von der einen Stellung in die andere Stellung befindet.

9. Erntemaschine (1) gemäß Anspruch 8, wobei die Sensoranordnung einen Wegsensor aufweist, der eingerichtet ist, einen Verfahrweg der Kolbenstange (27) zu erfassen.

10. Erntemaschine (1) gemäß einem der Ansprüche 2 bis 9, wobei die Kolben-Zylinder-Einheit (25) zum Aus- und Einfahren der Kolbenstange (27) in ein Druckfluidsystem (6) der Erntemaschine (1) eingebunden ist, und wobei die Sensoranordnung einen Drucksensor aufweist, der eingerichtet ist, eine Druckveränderung eines Druckfluids im Druckfluidsystem (6) zu erfassen.

## Claims

1. Harvester (1) with:
an overhead loading device (10), which has a first segment (11), which is mounted movably on the harvester (1), and a second segment (15), which is mounted pivotable about a vertical pivot axis (A2) on a longitudinal end of the first segment (11) facing away from the harvester (1), with the result that the second segment (15) is pivotable between a swung-out position, in which the second segment (15) extends as an extension of the length of the first segment (11), and a swung-in position, in which the second segment (15) is arranged alongside the first segment (11), and
a piston-cylinder unit (25) with a piston rod (27) for driving a pivoting movement of the second segment (15) from one position into the other position,
**characterized in that** the piston-cylinder unit (25) is configured such that a first part of the pivoting movement is realized by extending the piston rod (27) and a second part of the pivoting movement is realized by retracting the piston rod (27).

2. Harvester (1) according to claim 1, wherein a total pivoting angle (WG) of the second segment (15) of up to 180 degrees is defined between the swung-out position and the swung-in position of the second segment (15).

3. Harvester (1) according to claim 1 or 2, wherein the piston rod (27) of the piston-cylinder unit (25) is articulated at a first connection point (16, 12) to one out of the first and second segments (11, 15) and a cylinder (26) of the piston-cylinder unit (25) is articulated at a second connection point (12, 16) to the other out of the first and second segments (11, 15) of the overhead loading device (10), and wherein the connection points (12, 16) of the piston-cylinder unit (25) are arranged such that they are located between the first part and the second part of the pivoting movement in a line with the pivot axis (A2).

4. Harvester (1) according to one of claims 1 to 3, wherein the piston-cylinder unit (25) is set up such that its piston rod (27) is in a maximally extended position between the first part and the second part of the pivoting movement.

5. Harvester (1) according to one of claims 1 to 4, furthermore with a locking device (30), which is set up such that it can selectively block and release the pivoting movement of the second segment (15) from one position into the other position.

6. Harvester (1) according to claim 5, wherein the locking device (30) is set up such that it can selectively block and release the pivoting movement of the second segment (15) from the swung-out position into the swung-in position.

7. Harvester (1) according to claim 5 or 6, wherein the locking device (30) has a lock bar (31) and a locking claw (32), which is attached pivotably to one out of the first and second segments (11, 15), with the result that it is pivotable between a locking position, in which the locking claw (32) is in positive-locking engagement with the lock bar (31) attached to the other out of the first and second segments (11, 15) in order to block the pivoting movement of the second segment (15), and an unlocking position, in which the locking claw (32) is disengaged from the lock bar (31) in order to release the pivoting movement of the second segment (15), as well as drive means (35) for driving a pivoting movement of the locking claw (32).

8. Harvester (1) according to one of claims 1 to 7, furthermore with a control device (40), which is set up to control the piston-cylinder unit (25) to extend and retract the piston rod (27), and a sensor arrangement, which is coupled to the control device (40) and which is set up to detect when the second segment (15) of the overhead loading device (10) is at the end of the first part of the pivoting movement from one position into the other position.

9. Harvester (1) according to claim 8, wherein the sensor arrangement has a displacement sensor, which is set up to detect a travel length of the piston rod (27).

10. Harvester (1) according to one of claims 2 to 9, wherein the piston-cylinder unit (25) for extending and retracting the piston rod (27) is integrated in a pressurized-fluid system (6) of the harvester (1), and wherein the sensor arrangement has a pressure sensor, which is set up to detect a pressure change in a pressurized fluid in the pressurized-fluid system (6).

## Revendications

1. Machine de récolte (1) comprenant :
un dispositif de transfert (10) qui comporte un premier élément partiel (11), lequel est monté mobile sur la machine de récolte (1), et un second élément partiel (15) qui est monté pivotant autour d'un axe de pivotement vertical (A2) sur une extrémité longitudinale du premier élément partiel (11) située à l'opposé de la machine de récolte (1), de sorte que le second élément partiel (15) peut pivoter entre une position déployée, dans laquelle le second élément partiel (15) s'étend sous la forme d'un prolongement longitudinal du premier élément partiel (11), et une position repliée dans laquelle le second élément partiel (15) est disposé longitudinalement à côté du premier élément partiel (11), et
une unité piston-cylindre (25) comprenant une tige de piston (27) pour générer un mouvement de pivotement du second élément partiel (15) depuis une position vers l'autre position,
**caractérisée en ce que** l'unité piston-cylindre (25) est configurée de façon qu'une première partie du mouvement de pivotement est réalisée par le mouvement sortant de la tige de piston (27) et qu'une seconde partie du mouvement de pivotement est réalisée par un mouvement rentrant de la tige de piston (27).

2. Machine de récolte (1) selon la revendication 1, entre la position déployée et la position repliée du second élément partiel (15) étant défini un angle de pivotement total (WG) du second élément partiel (15) pouvant atteindre 180 degrés.

3. Machine de récolte (1) selon la revendication 1 ou 2, la tige de piston (27) de l'unité piston-cylindre (25) étant articulée au niveau d'un premier point d'attache (16, 12) sur l'un du premier et du second élément partiel (11, 15), et un cylindre (26) de l'unité piston-cylindre (25) étant articulé au niveau d'un second point d'attache (12, 16) sur l'autre du premier et du second élément partiel (11, 15) du dispositif de transfert (10), et les points d'attache (12, 16) de l'unité piston-cylindre (25) étant disposés de façon à se trouver, entre la première partie et la seconde partie du mouvement de pivotement, sur la même ligne que l'axe de pivotement (A2).

4. Machine de récolte (1) selon une des revendications 1 à 3, l'unité piston-cylindre (25) étant agencée de façon que, entre la première partie et la seconde partie du mouvement de pivotement, sa tige de piston (27) se trouve dans une position sortie maximale.

5. Machine de récolte (1) selon une des revendications 1 à 4, comprenant en outre un équipement de verrouillage (30) qui est agencé pour pouvoir, au choix, interdire et autoriser le mouvement de pivotement du second élément partiel (15) depuis l'une des positions vers l'autre position.

6. Machine de récolte (1) selon la revendication 5, **caractérisée en ce que** l'équipement de verrouillage (30) est agencé de façon à pouvoir, au choix, interdire et autoriser le mouvement de pivotement du second élément partiel (15) depuis la position déployée vers la position repliée.

7. Machine de récolte (1) selon la revendication 5 ou 6, l'équipement de verrouillage (30) comportant un verrou (31) et une griffe de verrouillage (32), laquelle est montée à pivotement sur un du premier et du second élément partiel (11, 15), de sorte qu'elle peut pivoter entre une position de verrouillage, dans laquelle la griffe de verrouillage (32) est en prise par complémentarité de formes avec le verrou (31) disposé sur l'autre du premier et du second élément partiel (11, 15) afin d'interdire le mouvement de pivotement du second élément partiel (15), et une position de déverrouillage dans laquelle la griffe de verrouillage (32) n'est pas en prise avec le verrou (31) afin d'autoriser le mouvement de pivotement du second élément partiel (15), et comportant des moyens d'entraînement (35) pour générer un mouvement de pivotement de la griffe de verrouillage (32).

8. Machine de récolte (1) selon une des revendications 1 à 7, comprenant en outre un dispositif de commande (40) qui est agencé pour amener l'unité piston-cylindre (25) à sortir et rentrer la tige de piston (27), et comprenant un agencement de capteur qui est couplé au dispositif de commande (40) et qui est agencé pour détecter lorsque le second élément partiel (15) du dispositif de transfert (10) se trouve à la fin de la première partie du mouvement de pivotement depuis une position vers l'autre position.

9. Machine de récolte (1) selon la revendication 8, l'agencement de capteur comportant un capteur de course qui est agencé pour détecter une course de déplacement de la tige de piston (27).

10. Machine de récolte (1) selon une des revendications 2 à 9, **caractérisée en ce que**, pour sortir et rentrer la tige de piston (27), l'unité piston-cylindre (25) est incluse dans un système de fluide de pression (6) de la machine de récolte (1), et l'agencement de capteur comporte un capteur de pression qui est agencé pour détecter une variation de pression d'un fluide de pression dans le système de fluide de pression (6).
